# EUROPEAN PATENT SPECIFICATION

(11) **EP 2 848 447 B1**
(45) Date of publication and mention of the grant of the patent: **13.12.2017**
(21) Application number: 13382354.2
(22) Date of filing: 12.09.2013
(51) Int. Cl.: B60K 35/00

(54) **METHOD FOR DISPLAYING AND/OR HANDLING INFORMATION IN A CAR**
VERFAHREN ZUR ANZEIGE UND/ODER HANDHABUNG VON INFORMATIONEN IN EINEM AUTO
PROCÉDÉ POUR AFFICHER ET/OU GÉRER DES INFORMATIONS DANS UNE VOITURE

(43) Date of publication of application: 18.03.2015
(73) Proprietor: Seat, S.A., 08760 Martorell (ES)
(72) Inventor: Baños, Victor, 08860 BARCELONA (ES); Bayona, Teresa, 08700 BARCELONA (ES)
(74) Representative: Isern-Jara, Nuria

(56) References cited:
- EP-A1- 2 460 694
- CN-U- 202 400 038
- DE-A1- 10 303 792
- DE-A1-102010 009 622
- DE-A1-102010 048 745
- JP-A- 2013 092 974

## Description

### OBJECT OF THE INVENTION

The patent application herein relates to a method for displaying and/or handling information in a car according to claim 1 that incorporates significant innovations and advantages.

In addition, this patent application also relates to a device for displaying and/or handling information in a car according to claim 7.

### BACKGROUND OF THE INVENTION

The screen of the car in the centre console of a vehicle is usually used as a device for displaying and/or handling information, such that the user can query the data available for said car and/or activate the various options by means of a control device in order to select a function, make various adjustments, change to another type of information, or expand the information shown at the time.

The methods associated with the devices for displaying and/or handling information in a car, comprise a number of elements that can be handled on a screen that is usually tactile, wherein images can transition in order to see the highlighted information in each of the areas.

The screen of the car is usually located on the instrument panel of the car or in the centre console, therefore being available to both the driver of the vehicle and the passenger, and can be operated by both one or the other. In particular for touch screens, the user can manage the information by means of finger contact, browsing through the available options, activating one or the other as desired. Said method of displaying and managing information in a vehicle is usually used for adjusting driver assistance variables, and also for navigation systems, for multimedia and/or telematics. It should be mentioned that having this type of interface in the vehicle, either a touch screen or not, can potentially impair driving.

According to document WO2009024400A1, a method and the corresponding visualization device, for displaying information in a motor vehicle, wherein a plurality of objects are graphically displayed on a screen, is known in the prior art. A user interface generates graphical data such that it is displayed so as to be arranged in a virtual ring. The objects rotate in the virtual ring like a carousel. Thus, the objects move in three dimensions relative to the user. The displacement is comprised of a lateral, zooming-out movement to form a circular trajectory.

On the other hand, document DE10303792A1 of the prior art describes a display device in the central console of a motor vehicle having, for example, an LCD, LED screen or lighting, preferably touch-sensitive, for displaying objects with partial objects. Input devices may be, for example, rotary switches and buttons. The option of moving objects in 3D (three dimensions) is shown.

On the other hand, document DE19941955A1 of the prior art describes a method comprising devices for viewing functions and selecting lists on a flat screen. Selecting the lists on the screen is displayed in three-dimensional optical systems, such that the lists are displayed on a virtual rotating roller which is convex towards the viewer. Thus, objects may be moved in 3D.

On the other hand, document WO2009143076A2 of the prior art describes a procedure for displaying a card, in which each activity can be represented in a area of the screen referred to as a card, being available for visualization, interaction and handling. The positional relationship between the cards is represented by a one-dimensional sequence. Recently opened cards are generally placed at the end of the sequence. In various embodiments, cards may be grouped as piles of cards. Therefore, objects or rows of objects can be dragged in a linear motion by finger contact.

On the other hand, document WO2012053801A2 of the prior art describes a mobile terminal and a method for controlling a touch screen by detecting special touch-sensitive inputs at multiple points, performing scroll operations. Said multi-point touch-sensitive inputs, detected by a controller, can be a multi-point swipe input and/or a multi-point tap double input. In response to a multiple-point swipe, a display screen can be moved at a faster rate with respect to a movement in response to detecting a single swipe point. This allows users to quickly navigate to the desired areas of an information screen using, for example, a two-finger swipe, and to move slowly with a one-finger swipe at the same swipe rate. Therefore, objects or rows of objects can be dragged in a linear motion by finger contact.

On the other hand, document DE102010048745A1 of the prior art describes selection of several objects on the display unit of the user interface. Predetermined object-specific target areas are graphically represented on the display unit, upon detection of the beginning of shift operation of the first two objects. A haptic control element provided on an edge of the display unit is activated by the operator, based on the selection of object.

So, there is still a need for an image transition system for touch screens which combines translational movement and image expansion in order to see the highlighted information for each of the available options.

### DESCRIPTION OF THE INVENTION

According to the present invention, this object is achieved by a method and a device for displaying and/or handling information in a car according to independent claims 1 and 7. Additional advantages of the invention are presented in the dependent claims of the accompanying description below.

In the present invention, displaying and handling information is such that it is made easy to operate and, therefore, focus on road conditions is not lost. Thus, the information is displayed such that the driver can view, understand and handle the information as quickly as possible. The information is therefore accessible and can be managed intuitively and quickly so the driver needs to devote the minimum amount of time to handling such information; even more so, taking into account the increase in the variables currently available to the user.

According to the invention, the method for displaying and/or handling information in a car comprises:
- an image displayed on a graphical display device by means of a control device,
- by means of an input device said image is moved to one side of the graphical display device,
- by means of a control device graphical data is generated which is displayed on said graphical display device, such that when the image is moved to one side of the graphical display device, a section of said image, corresponding to one side of the image opposite the side of the graphical display device to where the image is moved, is enlarged.

In this way, and considering that the first screen preferably shows the whole vehicle and a profile view, when the user touches the rear of the vehicle with their finger or drags the vehicle toward the front end, a second screen appears where only the rear of the vehicle is shown, much closer or larger than how the whole vehicle was displayed on the first screen. Simultaneously, the front end of the vehicle is cut off the screen. Similarly, when the user touches the front end of the vehicle with their finger or drags the vehicle toward the rear end, a second screen appears where only the front end of the vehicle is shown, much closer or larger than how the whole vehicle was displayed on the first screen. Simultaneously, the rear end of the vehicle is cut off the screen. Therefore, and advantageously, an enlarged image of the section of said image is shown in the graphical display by means of the control device, thereby showing a greater degree of detail and, as such, more information.

According to another aspect of the invention, enlarging said section opposite the side of the graphical display device to where the image is moved occurs simultaneously to said image moving to one side of the graphical display device. Thus, in respect of a view of the whole vehicle appearing on a first screen, positioned on the graphical display device towards a first side, when the image is dragged to said first side, the image moves and the area of the vehicle corresponding to the opposite side is enlarged, in order to see the information in detail which may be relevant. Therefore, the image is moved while enlarging the area to be highlighted. Similarly, when the image is dragged to a second side, different to the first side, the image moves and the area of the vehicle corresponding to the opposite side to said second side is enlarged, in order to see the information in detail that relates to that area which may be relevant. Said visual effect results in greater clarity in the zone which is being enlarged as the image is not cut or does not jump, but rather there is a transition with continuity from one image to the next enlarged image. On the other hand, there is an improvement in terms of the aesthetically pleasing display of the information.

More specifically, the enlarged image comprises additional details being displayed. In this way, information related to systems that are located in the front of the vehicle (engine, fluid levels, etc.) or in the rear (batteries, emissions, etc.) is displayed on the screen. The user can therefore receive more detailed and thorough information on vehicle status.

According to another aspect of the invention, the additional details comprise at least one element that can be activated via the input device. In this way, buttons or actuators related to systems that are located in the front or the rear of the vehicle are shown on the screen. So the user can, in addition to receiving more detailed and thorough information on vehicle status, interact with it, enabling or disabling the functions that have been shown, or activate new information that is in a latent state.

More specifically, enlarging the section of the image on the graphical display device is in response to said section being touched, said graphical display device preferably being a touch screen. In this way, user interaction is facilitated by pressing directly on the particular image that shows the information, no additional actuators to the graphical display device itself being required.

According to another aspect of the invention, the enlarged image is displayed in a lateral auxiliary image, as an expansion of the initial image, or as a separate image that appears as a result of said lateral movement of the initial image.

According to yet another aspect of the invention, by moving the enlarged image on the graphical display device via the input device, graphical data is generated in the control device, representing a reduction from the enlarged image to the image on the device graphical representation. In this way, the inverse effect of reducing the lateral image is also displayed, until it disappears or integrates into the original image, when the vehicle is brought to its central position on the screen.

The present invention also relates to a device for displaying and/or handling information in a car, comprising at least one input device, at least one graphical display device, and at least one control device configured such that an image is displayed on the graphical display device by means of the control device,
- by means of the input device said image is moved to one side of the graphical display device,
- graphical data is generated by means of the control device which is displayed on said graphical display device, such that when the image is moved to one side of the graphical display device, a section of said image, corresponding to one side of the image opposite the side of the graphical display device to where the image is moved, is enlarged.
In this way, and considering that the first screen preferably shows the whole vehicle and a profile view, when the user touches the rear of the vehicle with their finger or drags the vehicle toward the front end, a second screen appears where only the rear of the vehicle is shown, much closer or larger than how the whole vehicle was displayed on the first screen. Simultaneously, the front end of the vehicle is cut off the screen. Similarly, when the user touches the front end of the vehicle with their finger or drags the vehicle toward the rear end, a second screen appears where only the front end of the vehicle is shown, much closer or larger than how the whole vehicle was displayed on the first screen. Simultaneously, the rear end of the vehicle is cut off the screen.

Therefore, and advantageously, the control device displays an enlarged image of the section of said image in the graphical display, thereby showing a greater degree of detail and, as such, more information.

According to another aspect of the invention, the control device is configured such that enlarging said section opposite the side of the graphical display device to where the image is moved occurs simultaneously to said image moving to one side of the graphical display device. Thus, in respect of a view of the whole vehicle appearing on a first image, positioned on the screen towards a first side, when the image is dragged to said first side, the image moves and the area of the vehicle corresponding to the opposite side is enlarged, in order to see the information in detail which may be relevant. Therefore, the image is moved while enlarging the area to be highlighted. Similarly, when the image is dragged to a second side, different to the first side, the image moves and the area of the vehicle corresponding to the opposite side to said second side is enlarged, in order to see the information in detail that relates to that area which may be relevant. Said visual effect results in greater clarity in the zone which is being enlarged as the image is not cut or does not jump, but rather there is a transition with continuity from one image to the next enlarged image. On the other hand, there is an improvement in terms of the aesthetically pleasing display of the information.

More specifically, the enlarged image comprises additional details. In this way, information related to systems that are located in the front of the vehicle (engine, fluid levels, etc.) or in the rear (batteries, emissions, etc.) is displayed on the screen. The user can therefore receive more detailed and thorough information on vehicle status.

According to another aspect of the invention, the additional details comprise at least one element that can be activated via the input device. In this way, buttons or actuators related to systems that are located in the front or the rear of the vehicle are shown on the screen. So the user can, in addition to receiving more detailed and thorough information on vehicle status, interact with it, enabling or disabling the functions that have been shown, or activate new information that is in a latent state.

More specifically, by activating an additional detail via the input device at least one system of the car is activated. In this way, the user can choose the vehicle features being offered at all times.

More specifically, the input device is a touch screen. In this way, user interaction is facilitated by pressing directly on the particular image that shows the information, no additional actuators to the touch screen itself being required.

The accompanying drawings show, by way of non-limiting example, a method and an associated device for displaying and/or handling information in a car, formed according to the invention. Other characteristics and advantages of the aforementioned method and/or associated device, for displaying and/or handling information in a car, object of the invention herein, will become apparent from the description of a preferred, although not exclusive embodiment, which is illustrated by way of non-limiting example in the drawings appended, in which:

### BRIEF DESCRIPTION OF THE DRAWINGS

Figure 1.- General front, perspective view of the vehicle interface with the user at the dashboard, according to the invention herein;
Figure 2.- Schematic representation of the components and systems involved in the development of the invention herein;
Figure 3. - Is a view of a method for displaying the image of the vehicle, the movement of said image towards its sides, and the corresponding enlarged image, according to the invention herein;
Figure 4. - Is a view of a method for displaying the image of the vehicle, in transitional movement from the original image to the enlarged image of one of its sides, according to the invention herein;

### DESCRIPTION OF A PREFERRED EMBODIMENT

In view of the mentioned figures and according to the adopted numbering, an example of a preferred embodiment of the invention can be seen therein, which comprises the parts and elements indicated and described in detail below.

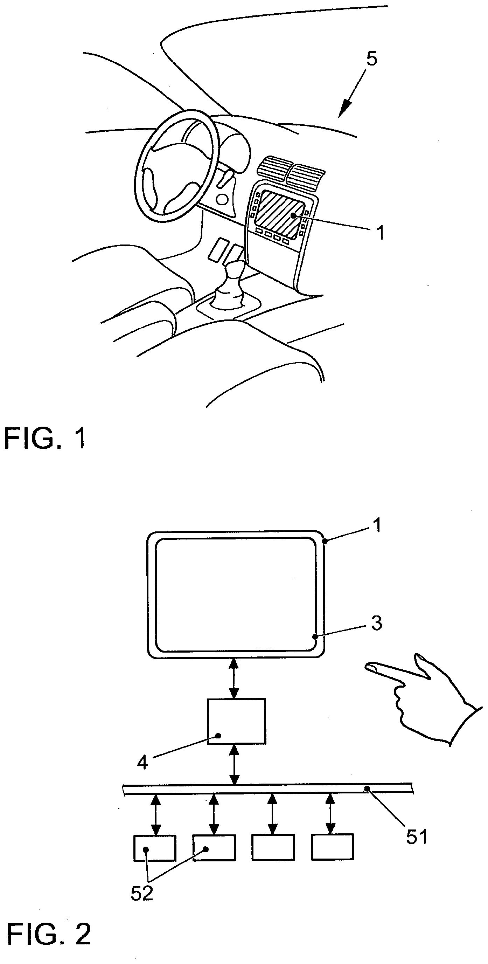

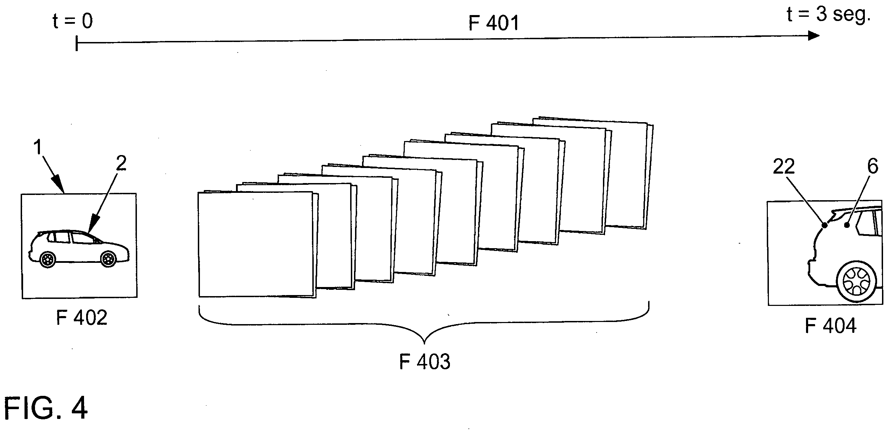

Therefore, as shown in Figures 1 to 4, the method for displaying and/or handling information in a car, comprises
- an image 2 being displayed on a graphical display device 1 by means of a control device 4,
- said image being moved 2 to one side of the graphical display device 1 by means of an input device 3,
- graphical data being generated by means of a control device 4 which is displayed on said graphical display device 1, such that when the image 2 is moved to one side of the graphical display device 1, a section 21, 22 of said image 2, corresponding to one side of the image 2 opposite the side of the graphical display device 1 to where the image 2 is moved, is enlarged.

Although the invention, in a preferred embodiment, focuses on the original image 2 moving left/right, it is not only limited to such movements. Such a transition can be carried out in multiple directions. The aim is to transition between two images 2 moving and zooming in to see the information to be highlighted in each case. The transition from the first image 2 to the second image 21, 22 is a combination of the vehicle moving, for example towards the front 21, the front end, which is not of interest, leaving the screen on one of the sides, leaving the rear end 22 in view and zooming in closer or expanding said image. The film term is a "dolly shot" along with a "zoom in". In other words, the initial screen 1 contains the whole vehicle 5 in a distanced (zoomed out) position and the lateral images 11, 12 contain the ends of the vehicle 5 in a close-up position. The transitions from one display to another occur continuously and simultaneously (movement + zoom). Hence, by means of the control device 4, an enlarged image 6 of the section 21, 22 of the image 2 is displayed on the graphical display device.

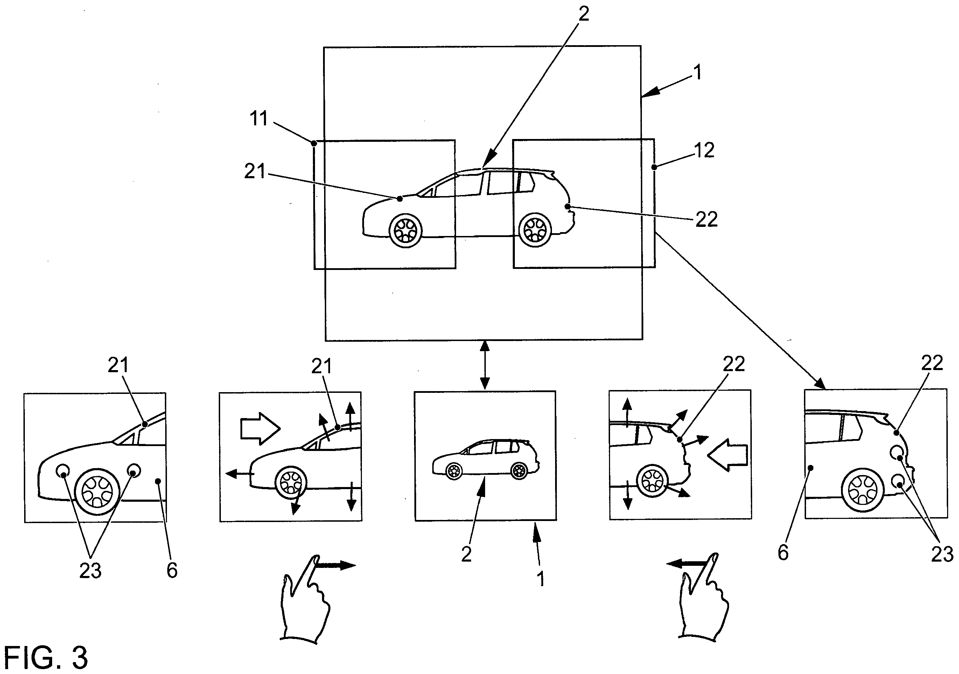

More specifically, and as seen in Figure 3, enlarging said section 21, 22 opposite the side of the graphical display device 1 to where the image is moved 2 occurs simultaneously to said image 2 moving to one side of the graphical display device 1. It should be noted that the image 2 displayed in the graphical display device 1 relates to the side view of a car. On the other hand, and preferably, the movement of the image 2 in the graphical display device 1, is horizontal, and the section 21, 22 of the image 2 corresponds to the engine side 21 and/or the side opposite the car boot side 22.

According to another aspect of the invention, and as seen in Figure 3, the enlarged image 6 comprises a display of additional details 23, said additional details comprising at least one element that can be activated via the input device 3.

According to yet another aspect of the invention, and as seen in Figure 3, enlarging the section 21, 22 of the image 2 on the graphical display device 1 is in response to said section 21, 22 being touched.

It should be noted, as seen in Figure 3, the enlarged image 6 is displayed in a lateral auxiliary image 11, 12, as an expansion of the initial image 2, or as a separate image that appears as a result of said lateral movement of the initial image 2. The lateral auxiliary image 11,12 may emerge from the initial image itself 2 or, alternatively, may appear from one side of the graphical display device 1.

According to another aspect of the invention, and as seen in Figure 3, by moving the enlarged image 6 on the graphical display device 1 via the input device 3, graphical data is generated in the control device 4 representing a reduction from the enlarged image 6 to the image 2 on the graphical display device 1. Hence, the initial image 2 is restored in reverse. In other words, this occurs by means of moving the vehicle to the central part of the graphical display device 1, and a distancing (zooming out or reduction in size) of the lateral auxiliary image 11,12.

In respect of the device for displaying and/or handling information in a car, as shown in Figures 1 to 4, said device comprises at least one input device 3, at least one graphical display device, and at least a control device 4 configured such that
- an image 2 is displayed on the graphical display device 1 by means of the control device 4,
- said image 2 is moved to one side of the graphical display device 1 by means of an input device 3,
- graphical data is generated by means of the control device 4 which is displayed on said graphical display device 1, such that when the image 2 is moved to one side of the graphical display device 1, a section 21, 22 of said image 2, corresponding to one side of the image 2 opposite the side of the graphical display device 1 to where the image 2 is moved, is enlarged.

More specifically, and as shown in Figures 2 and 3, the control device 4 displays an enlarged image 6 of the section 21, 22 of the image 2 on the graphical display device 1. The control device 4 is further configured such that enlarging said section 21, 22 opposite the side of the graphical display device 1 to where the image is moved 2 occurs simultaneously to said image 2 moving to one side of the graphical display device 1.

According to another aspect of the invention, and as seen in Figure 3, the enlarged image 6 comprises additional details 23.

More specifically, and as shown in Figures 2 and 3, the additional details 23 comprise at least one element that can be activated via the input device 3. By activating an additional detail 23 via the input device 3 at least one system of the car 51 is activated. The input device 3 is, in a preferred embodiment, a touch screen.

The details, shapes and dimensions and other accessory elements as well as the components used in the implementation of the aforementioned method, and associated device, for displaying and/or handling information in a car may be conveniently replaced by others which are technically equivalent and do not depart from the essential nature of the invention or from the scope defined by the claims contained in the list hereinafter.

### List of numerical references:

- (1): Graphical display device (vehicle interface screen)
- (11): Left lateral auxiliary image
- (12): Right lateral auxiliary image
- (2): Image (of a car)
- (21): Section of image (engine side)
- (22): Section of image (car boot side)
- (23): Additional details
- (3): Input device (touch screen)
- (4): Control device (onboard computer)
- (5): Vehicle
- (51): Internal communication channel of the vehicle
- (52): Other systems in the vehicle
- (6): Enlarged image

### List of references used as abbreviations of the text within the figures:

- F401: Time
- F402: Static image
- F403: Graphical data (dynamic, video)
- F404: Enlarged static image

## Claims

1. Method for displaying and/or handling information in a car, wherein:
- an image (2) is displayed on a graphical display device (1) by means of a control device (4),
- said image is moved (2) to one side of the graphical display device (1) by means of an input device (3),
- graphical data is generated by means of a control device (4) which is displayed on said graphical display device (1), such that when the image (2) is moved to one side of the graphical display device (1), a section (21, 22) of said image (2), corresponding to one side of the image (2) opposite the side of the graphical display device (1) to where the image (2) is moved, is enlarged,
the control device (4) displays an enlarged image (6) of the section (21, 22) of the image (2) on the graphical display device (1),
**characterised in that** the enlarged image (6) comprises a display of additional details (23)with information related to systems that are located in the front of the vehicle or in the rear.

2. Method according to claim 1 **characterised in that** enlarging said section (21, 22) opposite the side of the graphical display device (1) to where the image is moved (2) occurs simultaneously to said image (2) moving to one side of the graphical display device (1).

3. Method according to claim 1 **characterised in that** the additional details (23) comprise at least one element that can be activated via the input device (3).

4. Method according to claim 1 **characterised in that** enlarging the section (21,22) of the image (2) on the graphical display device (1) is in response to said section (21, 22) being touched.

5. Method according to claim 1 **characterised in that** the enlarged image (6) is displayed in an auxiliary lateral image (11,12).

6. Method according to claim 1, **characterised in that** by moving the enlarged image (6) on the graphical display device (1) via the input device (3), graphical data is generated in the control device (4) representing a reduction from the enlarged image (6) to the image (2) on the graphical display device (1).

7. Device for displaying and/or handling information in a car, comprising at least one input device (3), at least one graphical display device (1), and at least one control device (4) configured such that
- an image (2) is displayed on the graphical display device (1) by means of the control device (4),
- said image (2) is moved to one side of the graphical display device (1) by means of the input device (3),
- graphical data is generated by means of the control device (4) which is displayed on said graphical display device (1), such that when the image (2) is moved to one side of the graphical display device (1), a section (21, 22) of said image (2), corresponding to one side of the image (2) opposite the side of the graphical display device (1) to where the image (2) is moved, is enlarged,
the control device (4) displays an enlarged image (6) of the section (21, 22) of the image (2) on the graphical display device (1),
**characterised in that** the enlarged image (6) comprises additional details (23) with information related to systems that are located in the front of the vehicle or in the rear.

8. Device according to claim 7 **characterised in that** the control device (4) is configured such that enlarging said section (21, 22) opposite the side of the graphical display device (1) to where the image is moved (2) occurs simultaneously to said image (2) moving to one side of the graphical display device (1).

9. Device according to claim 7 **characterised in that** the additional details (23) comprise at least one element that can be activated via the input device (3).

10. Device according to claim 9 **characterised in that** on activating an additional detail (23) via the input device (3), at least one of the car's systems is activated (51).

11. Device according to claim 7 **characterised in that** the input device (3) is a touch screen.

## Patentansprüche

1. Verfahren zur Anzeige und/oder Handhabung von Informationen in einem Auto, wobei:
ein Bild (2) mittels einer Steuervorrichtung (4) auf einer Grafische-Anzeige-Vorrichtung (1) angezeigt wird,
das Bild (2) mittels einer Eingabevorrichtung (3) zu einer Seite der Grafische-Anzeige-Vorrichtung (1) bewegt wird,
grafische Daten mittels einer Steuervorrichtung (4) erzeugt werden, die auf der Grafische-Anzeige-Vorrichtung (1) angezeigt werden, so dass dann, wenn das Bild (2) zu einer Seite der Grafische-Anzeige-Vorrichtung (1) bewegt wird, ein Abschnitt (21, 22) des Bilds (2), der einer Seite des Bilds (2) gegenüber der Seite der Grafische-Anzeige-Vorrichtung (1), zu der das Bild (2) bewegt wird, entspricht, vergrößert wird,
die Steuervorrichtung (4) ein vergrößertes Bild (6) des Abschnitts (21, 22) des Bilds (2) auf der Grafische-Anzeige-Vorrichtung (1) anzeigt,
**dadurch gekennzeichnet, dass**
das vergrößerte Bild (6) eine Anzeige von weiteren Details (23) mit Informationen, die sich auf Systeme beziehen, welche sich im vorderen Teil des Fahrzeugs oder im hinteren Teil befinden, umfasst.

2. Verfahren nach Anspruch 1, **dadurch gekennzeichnet, dass** das Vergrößern des Abschnitts (21, 22) gegenüber der Seite der Grafische-Anzeige-Vorrichtung (1), zu der das Bild (2) bewegt wird, gleichzeitig mit dem Bewegen des Bilds (2) zu einer Seite der Grafische-Anzeige-Vorrichtung (1) erfolgt.

3. Verfahren nach Anspruch 1, **dadurch gekennzeichnet, dass** die weiteren Details (23) mindestens ein Element umfassen, das über die Eingabevorrichtung (3) aktiviert werden kann.

4. Verfahren nach Anspruch 1, **dadurch gekennzeichnet, dass** das Vergrößern des Abschnitts (21, 22) des Bilds (2) auf der Grafische-Anzeige-Vorrichtung (1) in Reaktion auf das Berühren des Abschnitts (21, 22) erfolgt.

5. Verfahren nach Anspruch 1, **dadurch gekennzeichnet, dass** das vergrößerte Bild (6) in einem seitlichen Zusatzbild (11, 12) angezeigt wird.

6. Verfahren nach Anspruch 1, **dadurch gekennzeichnet, dass** durch Bewegen des vergrößerten Bilds (6) über die Eingabevorrichtung (3) auf der Grafische-Anzeige-Vorrichtung (1) grafische Daten in der Steuervorrichtung (4) erzeugt werden, die eine Verkleinerung von dem vergrößerten Bild (6) zu dem Bild (2) auf der Grafische-Anzeige-Vorrichtung (1) darstellen.

7. Vorrichtung zur Anzeige und/oder Handhabung von Informationen in einem Auto, die mindestens eine Eingabevorrichtung (3), mindestens eine Grafische-Anzeige-Vorrichtung (1) und mindestens eine Steuervorrichtung (4) umfasst und so ausgeführt ist, dass
ein Bild (2) mittels der Steuervorrichtung (4) auf der Grafische-Anzeige-Vorrichtung (1) angezeigt wird,
das Bild (2) mittels der Eingabevorrichtung (3) zu einer Seite der Grafische-Anzeige-Vorrichtung (1) bewegt wird,
grafische Daten mittels der Steuervorrichtung (4) erzeugt werden, die auf der Grafische-Anzeige-Vorrichtung (1) angezeigt werden, so dass dann, wenn das Bild (2) zu einer Seite der Grafische-Anzeige-Vorrichtung (1) bewegt wird, ein Abschnitt (21, 22) des Bilds (2), der einer Seite des Bilds (2) gegenüber der Seite der Grafische-Anzeige-Vorrichtung (1), zu der das Bild (2) bewegt wird, entspricht, vergrößert wird,
die Steuervorrichtung (4) ein vergrößertes Bild (6) des Abschnitts (21, 22) des Bilds (2) auf der Grafische-Anzeige-Vorrichtung (1) anzeigt,
**dadurch gekennzeichnet, dass**
das vergrößerte Bild (6) weitere Details (23) mit Informationen, die sich auf Systeme beziehen, welche sich im vorderen Teil des Fahrzeugs oder im hinteren Teil befinden, umfasst.

8. Vorrichtung nach Anspruch 7, **dadurch gekennzeichnet, dass** die Steuervorrichtung (4) so ausgeführt ist, dass das Vergrößern des Abschnitts (21, 22) gegenüber der Seite der Grafische-Anzeige-Vorrichtung (1), zu der das Bild (2) bewegt wird, gleichzeitig mit dem Bewegen des Bilds (2) zu einer Seite der Grafische-Anzeige-Vorrichtung (1) erfolgt.

9. Vorrichtung nach Anspruch 7, **dadurch gekennzeichnet, dass** die weiteren Details (23) mindestens ein Element umfassen, das über die Eingabevorrichtung (3) aktiviert werden kann.

10. Vorrichtung nach Anspruch 9, **dadurch gekennzeichnet, dass** bei Aktivierung eines weiteren Details (23) über die Eingabevorrichtung (3) mindestens eines der Systems des Autos aktiviert wird (51).

11. Vorrichtung nach Anspruch 7, **dadurch gekennzeichnet, dass** die Eingabevorrichtung (3) ein Touchscreen ist.

## Revendications

1. Procédé destiné à afficher et/ou traiter des informations dans une voiture, dans lequel :
- une image (2) est affichée sur un dispositif d'affichage graphique (1) au moyen d'un dispositif de commande (4),
- ladite image (2) est déplacée sur un côté du dispositif d'affichage graphique (1) au moyen d'un dispositif d'entrée (3),
- des données graphiques sont générées au moyen d'un dispositif de commande (4), lesquelles sont affichées sur ledit dispositif d'affichage graphique (1), de telle sorte que lorsque l'image (2) est déplacée sur un côté du dispositif d'affichage graphique (1), une section (21, 22) de ladite image (2), correspondant à un côté de l'image (2) à l'opposé du côté du dispositif d'affichage graphique (1) sur lequel l'image (2) est déplacée, est agrandie,
le dispositif de commande (4) affiche une image agrandie (6) de la section (21, 22) de l'image (2) sur le dispositif d'affichage graphique (1),
**caractérisé en ce que** l'image agrandie (6) comprend un affichage de détails supplémentaires (23) avec des informations relatives à des systèmes qui sont situés sur l'avant du véhicule ou sur l'arrière.

2. Procédé selon la revendication 1 **caractérisé en ce que** l'agrandissement de ladite section (21, 22) à l'opposé du côté du dispositif d'affichage graphique (1) sur lequel l'image est déplacée (2) se produit simultanément au déplacement de ladite image (2) sur un côté du dispositif d'affichage graphique (1).

3. Procédé selon la revendication 1 **caractérisé en ce que** les détails supplémentaires (23) comprennent au moins un élément qui peut être activé par le dispositif d'entrée (3).

4. Procédé selon la revendication 1 **caractérisé en ce que** l'agrandissement de la section (21, 22) de l'image (2) sur le dispositif d'affichage graphique (1) se fait en réponse à un toucher de ladite section (21, 22).

5. Procédé selon la revendication 1 **caractérisé en ce que** l'image agrandie (6) est affichée dans une image latérale auxiliaire (11, 12).

6. Procédé selon la revendication 1, **caractérisé en ce qu'**en déplaçant l'image agrandie (6) sur le dispositif d'affichage graphique (1) par le dispositif d'entrée (3), on génère dans le dispositif de commande (4) des données graphiques représentant une réduction de l'image agrandie (6) vers l'image (2) sur le dispositif d'affichage graphique (1).

7. Dispositif destiné à afficher et/ou traiter des informations dans une voiture, comprenant au moins un dispositif d'entrée (3), au moins un dispositif d'affichage graphique (1), et au moins un dispositif de commande (4) configuré de telle sorte que
- une image (2) est affichée sur le dispositif d'affichage graphique (1) au moyen du dispositif de commande (4),
- ladite image (2) est déplacée sur un côté du dispositif d'affichage graphique (1) au moyen du dispositif d'entrée (3),
- des données graphiques sont générées au moyen du dispositif de commande (4), lesquelles sont affichées sur ledit dispositif d'affichage graphique (1), de telle sorte que lorsque l'image (2) est déplacée sur un côté du dispositif d'affichage graphique (1), une section (21, 22) de ladite image (2), correspondant à un côté de l'image (2) à l'opposé du côté du dispositif d'affichage graphique (1) sur lequel l'image (2) est déplacée, est agrandie,
le dispositif de commande (4) affiche une image agrandie (6) de la section (21, 22) de l'image (2) sur le dispositif d'affichage graphique (1),
**caractérisé en ce que** l'image agrandie (6) comprend des détails supplémentaires (23) avec des informations relatives à des systèmes qui sont situés sur l'avant du véhicule ou sur l'arrière.

8. Dispositif selon la revendication 7 **caractérisé en ce que** le dispositif de commande (4) est configuré de telle sorte que l'agrandissement de la section (21, 22) à l'opposé du côté du dispositif d'affichage graphique (1) sur lequel l'image est déplacée (2) se produit simultanément au déplacement de ladite image (2) sur un côté du dispositif d'affichage graphique (1).

9. Dispositif selon la revendication 7 **caractérisé en ce que** les détails supplémentaires (23) comprennent au moins un élément qui peut être activé par le dispositif d'entrée (3).

10. Dispositif selon la revendication 9 **caractérisé en ce que** lors de l'activation d'un détail supplémentaire (23) par le dispositif d'entrée (3), au moins un des systèmes de la voiture est activé (51).

11. Dispositif selon la revendication 7 **caractérisé en ce que** le dispositif d'entrée (3) est un écran tactile.
